# EUROPÄISCHE PATENTSCHRIFT

(11) **EP 2 555 484 B1**
(45) Veröffentlichungstag und Bekanntmachung des Hinweises auf die Patenterteilung: **19.04.2017**
(21) Anmeldenummer: 12005561.1
(22) Anmeldetag: 31.07.2012
(51) Int. Cl.: G06F 21/60, H04L 29/06, H04W 12/02, H04L 29/08, H04W 4/00

(54) **Sicherheitsmodul zur Unterstützung einer Proxy-Funktionalität**
Security module for supporting a proxy function
Module de sécurité destiné à soutenir une fonctionnalité proxy

(30) Priorität: 02.08.2011 DE 102011109201
(43) Veröffentlichungstag der Anmeldung: 06.02.2013
(73) Patentinhaber: Giesecke&Devrient, 81677 München (DE)
(72) Erfinder: Uminska-Ziesche, Monika, 80992 München (DE); Ulbricht, Thorsten, 81369 München (DE); Rudorff, Ingo, 81739 München (DE)

(56) Entgegenhaltungen:
- US-A1- 2004 065 728
- US-A1- 2009 132 808
- Lu Hongqiankaren ET AL: "Prevent Online Identity Theft - Using Network Smart Cards for Secure Online Transactions" In: "Field Programmable Logic and Application", 2004, Springer, Berlin, Heidelberg, XP55042763, ISSN: 0302-9743 ISBN: 978-3-54-045234-8 Bd. 3225, Seiten 342-353, * Abschnitt 4 * * Abbildung 5 *

## Beschreibung

Die vorliegende Erfindung betrifft ein Verfahren zur gesicherten Datenkommunikation zwischen einem Webbrowser auf einem mobilen Endgerät, beispielsweise einem Mobilfunkendgerät, und einem Server über ein Kommunikationsnetzwerk, beispielsweise das Internet, unter Verwendung eines Sicherheitsmoduls, beispielsweise einer (U)SIM-Mobilfunkkarte, sowie ein entsprechendes Sicherheitsmodul.

Prinzipiell kann ein solches Sicherheitsmodul in einem mobilen Endgerät als eine Art Proxy eingesetzt werden. Ein (U)SIM-Proxy könnte beispielsweise eine Lizenzverwaltung unterstützen, indem nur Anfragen eines Webbrowsers nach solchen URLs unterstützt würden, zu denen im (U)SIM eine gültige Lizenz, beispielsweise zum Abrufen von Multimedia-Inhalten, gespeichert wären. Weiter könnten im (U)SIM Nutzerzertifikate zum Authentisieren des Nutzers gegenüber einem Server, beispielsweise im Rahmen einer Bezahltransaktion, gespeichert sein.

Eine weitere, erwünschte Sicherung der Datenkommunikation, beispielsweise durch Verschlüsselung/Entschlüsselung mittels sicher auf dem Sicherheitsmodul gespeicherter Schlüssel und durchgeführt durch einen Prozessor des Sicherheitsmoduls, der von einem Prozessor des Endgeräts unabhängig ist, wäre ebenfalls prinzipiell mit einem Sicherheitsmodul als Proxy durchführbar.

Nachteilig an einer solchen Lösung, die daher in der Praxis nicht angewendet wird, ist, dass die Datenübertragung zwischen dem Endgerät und dem Sicherheitsmodul zu langsam ist, um die in der Praxis anfallenden Datenmengen in akzeptabler Zeit zu übertragen. Dies gilt insbesondere für Sicherheitsmodule in Form von (U)SIM-Karten, welche mit den entsprechenden Endgeräten in der Regel noch über das T=0- oder T=1-Protokoll kommunizieren, welche lediglich eine Datenübertragungsrate von ca. 100 kBit/s erlauben. Selbst dann, wenn ein Sicherheitsmodul und das Endgerät eingerichtet wären, über das USB- oder SWP-Protokoll zu kommunizieren, wodurch maximal 12 MBit/s bzw. 2 MBit/s übertragen werden könnten, wäre dies im Vergleich zu derzeit (UMTS mit HSDPA; 3,6 MBit/s im Downstream und 0,384 MBit/s im Upstream) oder in naher Zukunft (LTE; 100 MBit/s im Downstream und 50 MBit/s im Upstream) erreichbaren Datenübertragungsraten von mobilen Endgeräten bei weitem nicht ausreichend.

Die WO 2006/066382 schlägt einen Proxy-Server vor, der auf einem mobilen Endgerät installiert ist und Anfragen eines Webbrowsers des Endgeräts an einen Server umschlüsselt und komprimiert bzw. von dem Server empfangene Antworten decodiert bzw. entpackt und umschlüsselt, um eine Datenkommunikation zwischen Webbrowser und Server effektiver zu gestalten. Diese Lösung kann allerdings die hier geforderten Sicherheitsanforderungen nicht erfüllen, da eventuell auf dem Endgerät installierter Schadcode mangels Sicherung durch ein separates Sicherheitsmodul in der Regel direkten Zugriff auf übertragene und empfangene Daten hätte und diese manipulieren könnte.

Aus der Veröffentlichung von P.Urien "TLS-Tandem: a Collaborative Technology for Trusted WEB Applications", Consumer Communications and Networking Conference 2009, CCNC 2009, 6th IEEE, 10-13 Jan. 2009, ist der Vorschlag bekannt, eine vertrauenswürdige Verbindung zwischen einem Client und einem Server mithilfe einer Smart Card und eines Browsers herzustellen, der über eine TLS-Komponente verfügt und mit der Smart Card kommuniziert. Der Browser arbeitet in zwei Betriebsmodi, nämlich einem Proxy-Modus, in dem Daten über den Browser transparent zwischen der Smart Card und einem Server ausgetauscht werden, und einem Selektiv-Modus, in dem http-Anfragen in Redirect-Anweisungen umgesetzt werden. Der Aufbau der vertrauenswürdigen Verbindung erfolgt, indem der Browser mithilfe der Smart Card eine TLS-gesicherte Sitzung eröffnet. Dabei kommuniziert die Smart Card im Proxy-Modus direkt mit einem Server und führt eine wechselseitige Authentisierung durch, tauscht Zertifikate aus und handelt Schlüssel aus. Die Schlüssel werden anschließend der TLS-Komponente des Browsers zur Verfügung gestellt. Ist eine Sitzung erfolgreich eröffnet, führt die TLS-Komponente des Browsers den weiteren Datenaustausch durch, wobei sie ein SSL-gesichertes Schreibverfahren für ausgehende Daten und ein ebenfalls SSL-gesichertes Leseverfahren für eingehende Daten einsetzt. Das Verfahren erlaubt eine hohe Datenübertragungsrate, ist aber nur so sicher wie der Browser und über den Browser z.B. mittels Schadsoftware grundsätzlich angreifbar.

Ferner ist aus der US 2004/0065728 A1 eine Karte mit integriertem Schaltkreis zur Verschlüsselung von Daten bekannt, bei welcher die zu übertragenden und zu empfangenden Daten stets in beiden Richtungen verschlüsselt werden. Dies erfordert es stets, die Hardware der Karte an die maximale Übertragungsgeschwindigkeit anzupassen.

Aufgabe der vorliegenden Erfindung ist es, ein Verfahren zur gesicherten Datenkommunikation zwischen einem Webbrowser eines mobilen Endgeräts und einem Server unter Verwendung eines Sicherheitsmoduls in dem Endgerät vorzuschlagen, welches für einen Nutzer einfach durchzuführen ist und eine in der Praxis erforderliche Datenübertragungsrate bereitstellt.

Diese Aufgabe wird durch ein Verfahren, ein Sicherheitsmodul, sowie ein System mit den Merkmalen der nebengeordneten An-sprüche gelöst. Vorteilhafte Ausgestaltungen und Weiterbildungen sind in den abhängigen Ansprüchen angegeben.

Ein erfindungsgemäßes Verfahren zur gesicherten Datenkommunikation zwischen einem Webbrowser auf einem mobilen Endgerät und einem Server unter Verwendung eines in das mobile Endgerät integrierten oder damit verbundenen Sicherheitsmoduls umfasst folgende Schritte: Zwischen dem Sicherheitsmodul und dem Server wird ein Geheimdatum, beispielsweise ein so genannter Masterschlüssel, ausgehandelt. Das Sicherheitsmodul leitet dann aus dem Geheimdatum zumindest einen Schlüssel ab. Erfindungsgemäß überträgt das Sicherheitsmodul einen des zumindest einen abgeleiteten Schlüssels an den Webbrowser des Endgeräts. Die gesicherte Datenkommunikation zwischen dem Webbrowser und dem Server wird dann derart durchgeführt, dass in einer Übertragungsrichtung, d.h. vom Webbrowser zum Server oder vom Server zum Webbrowser, die Datenkommunikation direkt, d.h. ohne Zwischenschaltung des Sicherheitsmoduls, und unter Verwendung des an den Webbrowser übertragenen, abgeleiteten Schlüssels erfolgt, während sie in der anderen Übertragungsrichtung immer über das Sicherheitsmodul erfolgt.

Auf diese Weise kann die Datenübertragung, zumindest in der jeweiligen Richtung, in der größere Datenmengen anfallen, zwischen dem Webbrowser und dem Server ohne Zwischenschaltung des Sicherheitsmoduls und somit in der erforderlichen Geschwindigkeit durchgeführt werden. Das Sicherheitsmodul als "Flaschenhals" der Datenübertragung entfällt erfindungsgemäß.

Gleichzeitig bleibt die Sicherheit des Verfahrens hoch, weil das Geheimdatum, von dem alle zur Sicherung der Datenübertragung genutzten Schlüssel abgeleitet werden, stets ausschließlich in dem Sicherheitsmodul - und damit gesichert - gespeichert ist. Es erfolgt keine Übertragung des Geheimdatums an den Webbrowser. Weiter werden, wie nachfolgend erläutert, nie gleichzeitig sämtliche aus dem Geheimdatum abgeleiteten Schlüssel den Webbrowser übertragen. Eine Datenkommunikation zwischen dem Webbrowser und dem Server gänzlich ohne Zwischenschaltung des Sicherheitsmoduls ist dadurch nicht möglich. Vielmehr bleibt die Datenkommunikation selbst bei kompromittiertem Endgerät, beispielsweise durch Schadcode wie einen Trojaner oder dergleichen, gesichert. Ohne Zwischenschaltung des Sicherheitsmoduls bleibt für den Webbrowser die Datenkommunikation in einer Richtung nicht lesbar, da diese Daten mittels eines dem Webbrowser nicht vorliegenden und von diesem auch nicht ableitbaren Schlüssels verschlüsselt sind. Somit behält das Sicherheitsmodul prinzipbedingt immer die Kontrolle über eine Richtung der Datenkommunikation, unabhängig von eventuellem Schadcode auf dem Endgerät.

Das erfindungsgemäße Verfahren kann - mittels eines erfindungsgemäßen Sicherheitsmoduls - bereits auf derzeit erhältlichen Endgeräten durchgeführt werden. Eine Änderung der Hardware der verwendeten Endgeräte ist nicht notwendig. Dies gilt für gängige (UMTS) und zukünftige (LTE) Technologien.

Weiterhin gilt, dass das vorgeschlagene Verfahren mit allen in diesem Technologiebereich herrschenden Standards konform ist.

Ein erfindungsgemäßes Sicherheitsmodul ist eingerichtet, in ein mobiles Endgerät integriert oder damit geeignet verbunden zu werden. Weiter ist das Sicherheitsmodul eingerichtet zum Durchführen einer gesicherten Datenkommunikation zwischen einem Webbrowser eines mobilen Endgeräts und einem Server ein Geheimdatum mit dem Server auszuhandeln und zumindest einen Schlüssel aus dem Geheimdatum abzuleiten. Erfindungsgemäß ist das Sicherheitsmodul eingerichtet, einen des zumindest einen Schlüssels an einen Webbrowser des mobilen Endgeräts zu übertragen. Damit kann eine gesicherte Datenkommunikation zwischen dem Server und dem Webbrowser derart durchgeführt werden, dass in einer Übertragungsrichtung die gesicherte Datenkommunikation ohne Zwischenschaltung des Sicherheitsmoduls und unter Verwendung des an den Webbrowser übertragenen abgeleiteten Schlüssels erfolgt.

Als Sicherheitsmodul kann beispielsweise eine (U)SIM-Mobilfunkkarte, eine sichere Speicherkarte oder dergleichen verwendet werden. Solche Sicherheitsmodule werden in der Regel in die entsprechenden Endgeräte integriert. Auch eine Chipkarte kann als Sicherheitsmodul eingesetzt werden. Ein solches Sicherheitsmodul kann über ein geeignetes Lesegerät mit einem mobilen Endgerät verbunden werden.

Ein mobiles Endgerät umfasst einen Webbrowser und ist eingerichtet, ein erfindungsgemäßes Sicherheitsmodul aufzunehmen oder damit verbunden zu werden. Dabei umfasst der Webbrowser eine Webbrowsererweiterung, welche eingerichtet ist, das Sicherheitsmodul zu veranlassen, für eine gesicherte Datenkommunikation mit einem Server ein Geheimdatum mit dem Server auszuhandeln und zumindest einen Schlüssel aus dem Geheimdatum abzuleiten. Weiter ist die Webbrowserereiterung eingerichtet, einen des zumindest einen abgeleiteten Schlüssels von dem Sicherheitsmodul zu empfangen und die gesicherte Datenkommunikation des Webbrowsers mit dem Server unter Verwendung des abgeleiteten Schlüssels zu unterstützen.

Mobile Endgeräte im Rahmen der vorliegenden Erfindung sind beispielsweise Mobilfunkendgeräte, Smartphones, Tablets, Netbooks, Notebooks und dergleichen.

Ein erfindungsgemäßes System schließlich umfasst ein erfindungsgemäßes Sicherheitsmodul, ein mobiles Endgerät sowie einen Server. Diese Komponenten sind jeweils eingerichtet, das erfindungsgemäße Verfahren, wie beschrieben, durchzuführen.

Wie erwähnt, kann der Webbrowser des Endgeräts eine Webbrowsererweiterung, beispielsweise im Form eines Plug-ins, umfassen, welche das erfindungsgemäße Verfahren in nachfolgend beschriebener Weise unterstützen kann.

Die Webbrowsererweiterung kann beispielsweise immer dann, wenn der Webbrowser eine Anfrage an einen Server stellt, ermitteln, beispielsweise anhand der entsprechenden URL, ob für diese Anfrage eine gesicherte Datenübertragung erforderlich ist. Ist dies der Fall, kann die Webbrowsererweiterung das erfindungsgemäße Sicherheitsmodul dazu veranlassen, für eine gesicherte Datenkommunikation mit dem entsprechenden Server das Geheimdatum mit dem Server auszuhandeln und den zumindest einen Schlüssel aus dem Geheimdatum abzuleiten. Die Webbrowsererweiterung ist hier also selbst als Proxy - zwischen Webbrowser und Sicherheitsmodul - tätig. Weiter ist die Webbrowsererweiterung vorzugsweise eingerichtet, einen des zumindest einen abgeleiteten Schlüssels von dem Sicherheitsmodul zu empfangen und die gesicherte Datenkommunikation des Webbrowsers mit dem Server unter Verwendung des abgeleiteten Schlüssels in nachfolgend beschriebener Weise zu unterstützen. Auch hier kann die Webbrowsererweiterung, wie nachstehend beschrieben, als Proxy - nun zwischen Webbrowser und Server - angesehen werden.

Im Rahmen des erfindungsgemäßen Verfahrens kann der Schritt des Aushandelns des Geheimdatums mittels eines bekannten, kryptographischen Verfahrens durchgeführt werden, beispielsweise mittels eines SSL/TLS-Handshakes. Vorzugsweise erfolgt während dieses Schrittes eine ein- oder zweiseitige Authentisierung, d.h. der Server authentisiert sich mittels eines Serverzertifikats bei dem Sicherheitsmodul und/oder das Sicherheitsmodul authentisiert sich mittels eines einem Nutzer des Sicherheitsmoduls zugeordneten, auf dem Sicherheitsmodul gespeicherten Nutzerzertifikats beim Server. Auf diese Weise kann die Sicherheit der Datenkommunikation und im Rahmen der Datenkommunikation eventuell durchgeführter Transaktionen weiter erhöht werden. Lediglich wer im Besitz des Sicherheitsmoduls bzw. des Endgeräts mit Sicherheitsmodul ist, in der Regel der legitime Nutzer, kann eine entsprechende gesicherte Datenkommunikation durchführen.

Vorzugsweise leitet das Sicherheitsmodul im Schritt des Ableitens des zumindest einen Schlüssels aus dem Geheimdatum einen Verschlüsselungsschlüssel ab. Dieser ist dazu eingerichtet, im Rahmen der gesicherten Datenkommunikation an den Server zu übertragende Daten zu verschlüsseln. Weiter leitet das Sicherheitsmodul in der Regel einen Entschlüsselungsschlüssel ab. Dieser ist entsprechend dazu eingerichtet, im Rahmen der gesicherten Datenkommunikation von dem Server empfangene Daten zu entschlüsseln. Es versteht sich, dass entsprechende Schlüssel, abhängig von dem ausgehandelten Geheimdatum, ebenfalls im Server abgeleitet werden. Die Ableitung erfolgt vorzugsweise randomisiert, d.h. unter Zuhilfenahme von (Pseudo-) Zufallszahlen.

Im Rahmen des genannten SSL/TLS-Handshakes wird als Verschlüsselungsschlüssel ein so genannter "CLIENT_WRITE_KEY" von einem Geheimdatum, welches dort "MASTER_KEY" genannt wird, abgeleitet. Dem Entschlüsselungsschlüssel entspricht dann ein so genannter "SER-VER_WRITE_KEY".

Im Schritt des Übertragens des einen Schlüssels kann das Sicherheitsmodul dann in einem Fall den Verschlüsselungsschlüssel an den Webbrowser übertragen. Die Webbrowsererweiterung kann dann diesen Verschlüsselungsschlüssel in Empfang nehmen und die gesicherte Datenübertragung wie nachstehend beschrieben unterstützen. Dies ist insbesondere dann sinnvoll, wenn im Rahmen der durchzuführenden Datenübertragung größere Datenmengen von dem Webbrowser an den Server zu übertragen sind, die Hauptmenge der Daten also im Upstream zu erfolgen hat, während die von dem Server an den Webbrowser zu übertragende Datenmenge gering ist. Wie erwähnt, kann hier die erstgenannte Richtung der Datenübertragung ohne Zwischenschaltung des Sicherheitsmoduls und damit ohne Einschränkung der Datenübertragungsrate infolge der erwähnten, beschränkten Kommunikationsprotokolle, über welche eine Datenübertragung zwischen dem Sicherheitsmodul und dem mobilen Endgerät zu erfolgen hat, durchgeführt werden. Eine Datenkommunikation in der umgekehrten Richtung, d.h. im Downstream, erfolgt dagegen weiterhin über das Sicherheitsmodul. D.h. von dem Server empfangene Daten werden von dem Sicherheitsmodul mittels des Entschlüsselungsschlüssels entschlüsselt und dann an den Webbrowser übertragen. Dies ist im beschriebenen Zusammenhang aber nicht weiter nachteilig, da es sich hier nur um geringe Datenmengen handelt. Eine für den Nutzer bemerkbare Verzögerung findet dabei nicht statt.

Im umgekehrten Fall, d.h. wenn im Rahmen der Datenübertragung im Downstream, d.h. vom Server zum Webbrowser, große Datenmengen anfallen, während im umgekehrter Richtung lediglich kleine Datenmengen zu übertragen sind, überträgt das Sicherheitsmodul entsprechend den Entschlüsselungsschlüssel an den Webbrowser und der Verschlüsselungsschlüssel verbleibt im Sicherheitsmodul.

Wie angedeutet, unterstützt die Webbrowsererweiterung die gesicherte Datenkommunikation mit dem Server dadurch, dass sie im ersten Fall, wenn sie, wie vorstehend beschrieben, den Verschlüsselungsschlüssel von dem Sicherheitsmodul empfängt, an den Server zu übertragende Daten mittels des Verschlüsselungsschlüssels verschlüsselt und an den Server überträgt. Im anderen Fall, wenn also die Webbrowsererweiterung den Entschlüsselungsschlüssel von dem Sicherheitsmodul empfängt, unterstützt sie die gesicherte Datenübertragung, indem sie von dem Server empfangene Daten mittels des Entschlüsselungsschlüssels entschlüsselt und an den Webbrowser weiterleitet. Die Webbrowsererweiterung agiert hier jeweils als Proxy zwischen Webbrowser und Server.

Es sind weiterhin Fälle denkbar, in denen im Rahmen einer Datenübertragung zwischen Webbrowser und Server sowohl in der einen Übertragungsrichtung als auch in der anderen Übertragungsrichtung nicht unerhebliche Datenmengen zu übertragen sind. Wie erwähnt, ist es aus Sicherheitsgründen nicht erwünscht, dass der Webbrowser zu einem Zeitpunkt im Besitz sowohl des Verschlüsselungsschlüssels als auch des Entschlüsselungsschlüssels ist. Denn dann wäre es möglich, eine vollständige gesicherte Datenkommunikation mit dem Server unter Umgehung des Sicherheitsmoduls durchzuführen. Eine solche Kommunikation könnte dann insbesondere auch von einem auf einem mobilen Endgerät befindlicher Schadcode, beispielsweise einen Trojaner geführt werden. Erschwerend ist hierbei, dass es in der Regel nicht möglich ist, einen einmal an den Webbrowser übertragenen Schlüssel wieder "einzuziehen".

Prinzipiell wäre es denkbar, eine Datenübertragung, in der in beiden Übertragungsrichtungen größere Datenmengen zu übertragen sind, mit dem bisher beschriebenen Verfahren sicher und einigermaßen effektiv durchzuführen. Dazu könnte die gesamte Datenübertragung in mehrere Abschnitte unterteilt werden. Ein Abschnitt bestünde aus einem solchen Anteil der Datenübertragung, in dem größere Datenmengen jeweils in einer Richtung zu übertragen sind. Änderte sich die Übertragungsrichtung, endete der aktuelle Abschnitt und ein neuer Abschnitt begönne. Für den neuen Abschnitt wäre ein neues Geheimdatum zwischen Sicherheitsmodul und Server auszuhandeln und es wären anschließend jeweilige Schlüssel aus dem neu ausgehandelten Geheimdatum abzuleiten. Da beispielsweise ein aus dem neuen Geheimdatum abgeleiteter und anschließend an den Webbrowser übertragener Verschlüsselungsschlüssel keine Beziehung zu einem in dem vorhergehenden Abschnitt an den Webbrowser übertragenen Entschlüsselungsschlüssel hat, der auf einem anderen, zuvor ausgehandelten Geheimdatum basiert, genügte diese Lösung prinzipiell den geforderten Sicherheitsbedingungen, dass nämlich nie gleichzeitig entsprechende Ver- und Entschlüsselungsschlüssel im Webbrowser vorliegen. Nachteilig an dieser Lösung ist aber, dass das jeweils neue Aushandeln eines Geheimdatums zwischen Sicherheitsmodul und Server selbst Ressourcen benötigt und die Datenübertragung dadurch bremst.

Gemäß einer bevorzugten Ausführungsform der vorliegenden Erfindung wird dieses Problem dadurch gelöst, dass das Sicherheitsmodul im Laufe der gesicherten Datenkommunikation aus dem ausgehandelten Geheimdatum einen weiteren Verschlüsselungsschlüssel und einen weiteren Entschlüsselungsschlüssel ableitet, wobei der weitere Verschlüsselungsschlüssel den zuvor abgeleiteten Verschlüsselungsschlüssel ersetzt und der weitere Entschlüsselungsschlüssel den zuvor abgeleiteten Entschlüsselungsschlüssel ersetzt. Ein erneutes Aushandeln eines Geheimdatums ist jedoch nicht erforderlich; es werden vielmehr lediglich Ver- und Entschlüsselungsschlüssel jeweils ersetzt. Das einmal ausgehandelte Geheimdatum verlässt das Sicherheitsmodul dagegen nicht. Im Rahmen eines vorstehend beispielhaft genannten SSL/TLS-Handshakes ist diese Vorgehensweise unter dem Begriff "resumed TLS-Handshake" bekannt.

Wird nun beispielsweise der neu abgeleitete Verschlüsselungsschlüssel an den übertragen, stellt dies kein Sicherheitsproblem dar, obwohl der Webbrowser noch im Besitz des vormals aktuellen Entschlüsselungsschlüssels ist. Denn auch der vormals aktuelle Entschlüsselungsschlüssel ist im Rahmen der Datenkommunikation durch einen ebenfalls neu abgeleiteten Entschlüsselungsschlüssel ersetzt worden. Dieser liegt aber nur im Sicherheitsmodul vor, nicht im Webbrowser.

Auf diese Weise wird es möglich, dass der Webbrowser, der bisher in der Lage war, mittels des bisher aktuellen Entschlüsselungsschlüssels von dem Server empfangene große Datenmengen zu entschlüsseln, nun in die Lage versetzt wird, mittels des weiteren Verschlüsselungsschlüssels - quasi in einem neuen Abschnitt der gesicherten Datenkommunikation - große Mengen von Daten zu verschlüsseln und an den Server zu übertragen. Das Sicherheitsmodul muss dazu lediglich den jeweiligen weiteren Schlüssel von dem bereits vorliegenden, einmalig mit dem Server ausgehandelten Geheimdatum, beispielsweise einem Masterschlüssel, ableiten und an den Webbrowser übertragen. Auch die Ableitung der weiteren Schlüssel erfolgt vorzugsweise randomisiert, in gleicher Weise natürlich auf Seiten des Servers. Dieser Prozess des Ableitens weiteren Ver- und Entschlüsselungsschlüssel kann mehrfach wiederholt werden. Wenn beispielsweise im nächsten Schritt wieder größere Datenmengen von dem Server zu empfangen sind, leitet das Sicherheitsmodul erneut einen weiteren Verschlüsselungsschlüssel und einen weiteren Entschlüsselungsschlüssel ab, welche die entsprechenden aktuellen Schlüssel ersetzen, und überträgt den zuletzt abgeleiteten Entschlüsselungsschlüssel an den Webbrowser.

Auf diese Weise kann eine gesicherte Datenübertragung zwischen einem Webbrowser auf einem mobilen Endgerät und einem Server unter Verwendung eines Sicherheitsmoduls auf dem Endgerät, bei der in beide Richtungen große Datenmengen zu übertragen sind, sicher und effektiv durchgeführt werden. Die im Zusammenhang mit einer Datenkommunikation zwischen dem Sicherheitsmodul und dem Endgerät verfügbaren, hinsichtlich einer erzielbaren Datenübertragungsrate beschränkten Kommunikationsprotokolle bremsen die zwischen dem Webbrowser und dem Server durchzuführende gesicherte Datenübertragung nicht.

Gemäß einer weiteren Ausführungsform kann vor dem Aufbauen der gesicherten Datenkommunikation zwischen dem Webbrowser des Endgeräts und dem Server eine gegenüber dem Sicherheitsmodul zu beantwortende Sicherheitsabfrage an einen Nutzer des mobilen Endgeräts gerichtet werden. Lediglich dann, wenn diese Sicherheitsabfrage erfolgreich ist, unterstützt das Sicherheitsmodul die gesicherte Datenkommunikation in der beschriebenen Weise, macht sie also erst möglich. Auf diese Weise wird die durchzuführende, gesicherte Datenübertragung zusätzlich gesichert, insbesondere in solchen Fällen, in denen das mobile Endgerät dem legitimen Nutzer abhanden gekommen, beispielsweise gestohlen worden ist.

Besonders vorteilhaft ist es, wenn eine Antwort auf die Sicherheitsabfrage direkt, d.h. ohne Zwischenschaltung des mobilen Endgeräts, in das Sicherheitsmodul eingegeben wird. Damit wird beispielsweise verhindert, dass die Antwort, manipuliert werden kann, etwa durch Schadcode auf dem Endgerät. Eine solche direkte Eingabe kann beispielsweise durch gezieltes Schütteln des Sicherheitsmoduls oder dergleichen erfolgen, welches durch einen Bewegungssensor des Sicherheitsmoduls detektierbar ist. Dazu muss das Sicherheitsmodul nicht aus dem Endgerät entfernt werden.

Es ist weiter vorteilhaft, wenn die Sicherheitsabfrage und/ oder eine Antwort auf die Sicherheitsabfrage abhängig sind von in einer nachfolgenden gesicherten Datenkommunikation zu übertragenden Daten. Damit kann zusätzlich einer Manipulation der Datenübertragung vorgebeugt werden. Damit das Sicherheitsmodul eine gesicherte Datenkommunikation zum Durchführen einer Transaktion einer ersten Art, beispielsweise einer Inlandsüberweisung, aufbaut, kann es beispielsweise notwendig sein, dass das Sicherheitsmodul - als Antwort auf die Sicherheitsabfrage - zweimal geschüttelt wird. Ein Aufbauen einer entsprechenden Datenkommunikation für eine Transaktion einer zweiten Art, beispielsweise einer Auslandsüberweisung, verlangt hingegen beispielsweise ein viermaligen Schütteln oder ein zweimaliges Klopfen des Sicherheitsmoduls bzw. des Endgerät mit Sicherheitsmodul auf einen harten Gegenstand, beispielsweise einen Tisch oder dergleichen.

Die Erfindung wird im Folgenden mit Bezug auf die beiliegenden Zeichnungen beispielhaft beschrieben. Darin zeigen:
- Figur 1: Komponenten eines erfindungsgemäßen Systems und
- Figuren 2 bis 4: Schritte einer bevorzugten Ausführungsform eines erfindungsgemäßen Verfahrens.

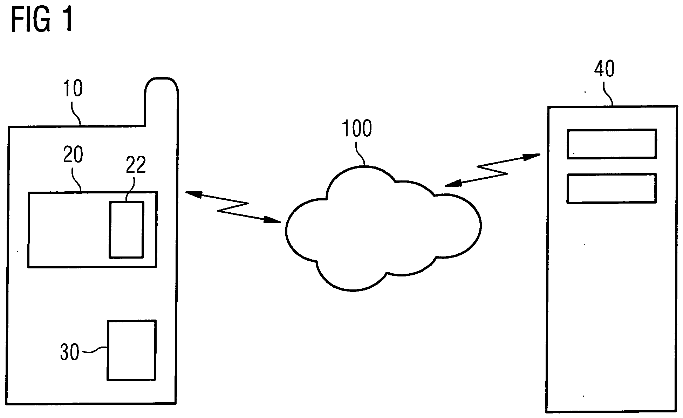

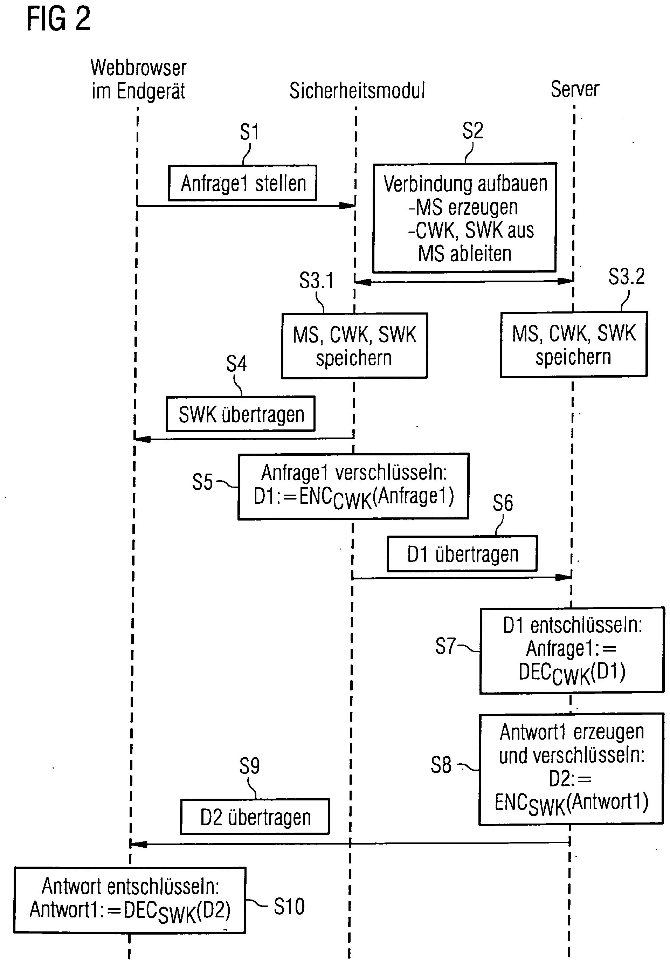

Mit Bezug auf die Figuren 2 bis 4 werden Schritte einer bevorzugten Ausführungsform eines Verfahrens zur gesicherten Datenkommunikation zwischen in Fig. 1 dargestellten Komponenten, einen Webbrowser 20 auf einem mobilen Endgerät 10 und einem Server 40, beschrieben. Das mobile Endgerät 10 kann dabei beispielsweise ein Mobilfunkendgerät, ein Smartphone, ein Tablet, ein Netbook, ein Notebook oder dergleichen sein.

Der Webbrowser 20 des Endgeräts 10 umfasst eine nachstehend genauer beschriebene Webbrowsererweiterung 22, welche die gesicherte Datenkommunikation in Kombination mit einem Sicherheitsmodul 30, welches in das Endgerät 10 integriert ist oder mit dem Endgerät 10 über ein geeignetes Lesegerät (nicht gezeigt) verbunden ist, unterstützt. Die Webbrowsererweiterung 22 kann beispielsweise in Form eines Plug-ins bereitgestellt werden, welches in bekannter Weise über eine geeignete Schnittstelle in den Webbrowser 20 "eingeklinkt" werden kann. Die Funktionalität der Webbrowserweiterung 22 kann aber auch bereits der Webbrowser 20 selbst umfassen.

Das Sicherheitsmodul 30 ist im gezeigten Beispiel als (U)SIM-Karte dargestellt. Andere geeignete Datenträger, beispielsweise eine sichere Speicherkarte oder eine Chipkarte können in nachstehend beschriebener Weise als Sicherheitsmodul 30 eingesetzt werden

Wie in Fig. 2 mit Bezug auf Schritt S1 dargestellt, wird die gesicherte Datenkommunikation zwischen dem Webbrowser 20 und dem Server 40 dadurch eingeleitet, dass der Webbrowser 20 eine erste Anfrage an den Server 40 stellt. In dem nachfolgend beschriebenen Beispiel findet eine Datenkommunikation zwischen dem Webbrowser 20 und einem Server 40 einer Bank statt, in deren Rahmen verschiedene sicherheitsrelevante Transaktionen durchgeführt werden.

Die Webbrowsererweiterung 22 erkennt anhand der Anfrage, beispielsweise anhand der URL, dass die nachfolgende Datenkommunikation kryptographisch gesichert werden muss. Daher veranlasst die Webbrowsererweiterung 22 (in einem nicht gezeigten Schritt) das Sicherheitsmodul 30, entsprechende Vorbereitungen zum Aufbau einer gesicherten Verbindung zu dem Server 40 zu treffen.

Das Sicherheitsmodul 30 baut daraufhin, wie mit Bezug auf Schritt S2 dargestellt, eine gesicherte Verbindung zu dem Server 40 auf. Dazu wird über ein Netzwerk 100 (vgl. Fig. 1), beispielsweise das Internet, zwischen dem Sicherheitsmodul 30 und dem Server 40 mittels eines geeigneten Verfahrens ein Geheimdatum MS ausgehandelt und dadurch erzeugt. Beispielhaft wird im Folgenden zu diesem Zweck ein bekanntes SSL/TLS-Handshake-Verfahren beschrieben. Andere, ähnliche Verfahren sind gleichfalls einsetzbar.

Als Geheimdatum MS wird ein sogenannter Masterschlüssel MS ausgehandelt. Dieser Masterschlüssel MS liegt jeweils nur dem Server 40 und dem Sicherheitsmodul 30 vor, nicht aber dem Webbrowser 20 oder seiner Erweiterung 22. In dem Sicherheitsmodul 30 und dem Server 40 werden dann, in jeweils gleicher Weise, aus dem Masterschlüssel MS jeweils ein Verschlüsselungsschlüssel CWK ("CLIENT_WRIZE_KEY") und ein Entschlüsselungsschlüssel SWK ("SERVER_WRTTE_KEY") abgeleitet. Die Ableitung diese Schlüssel erfolgt randomisiert, also unter Verwendung von (Pseudo-) Zufallszahlen. Die Namensgebung der Schlüssel erfolgt hier aus Sicht des "Clients", des Sicherheitsmoduls 30. Der Verschlüsselungsschlüssel CWK dient dazu, Daten - auf Seiten des Sicherheitsmoduls 30 - zu verschlüsseln, die vom Sicherheitsmodul 30 an den Server 40 gesendet - und dort mit dem gleichen Schlüssel CWK - entschlüsselt werden. Der Entschlüsselungsschlüssel SWK dient dem Sicherheitsmodul 30 dazu, vom Server 40 mittels dieses Schlüssels SWK verschlüsselte Daten zu entschlüsseln. Wie aus dem obigen ersichtlich, handelt es sich bei der mittels der beschriebenen Schlüssel durchgeführten Verschlüsselung jeweils um ein symmetrisches Verfahren, d.h. ein Schlüssel dient jeweils zur Ver- und zur Entschlüsselung.

Wie mit Bezug auf die Schritte S3.1 und S3.2 angedeutet, werden der ausgehandelten Masterschlüssel MS und die daraus abgeleiteten Schlüssel CWK, SWK in dem Sicherheitsmodul 30 und dem Server 40 gespeichert.

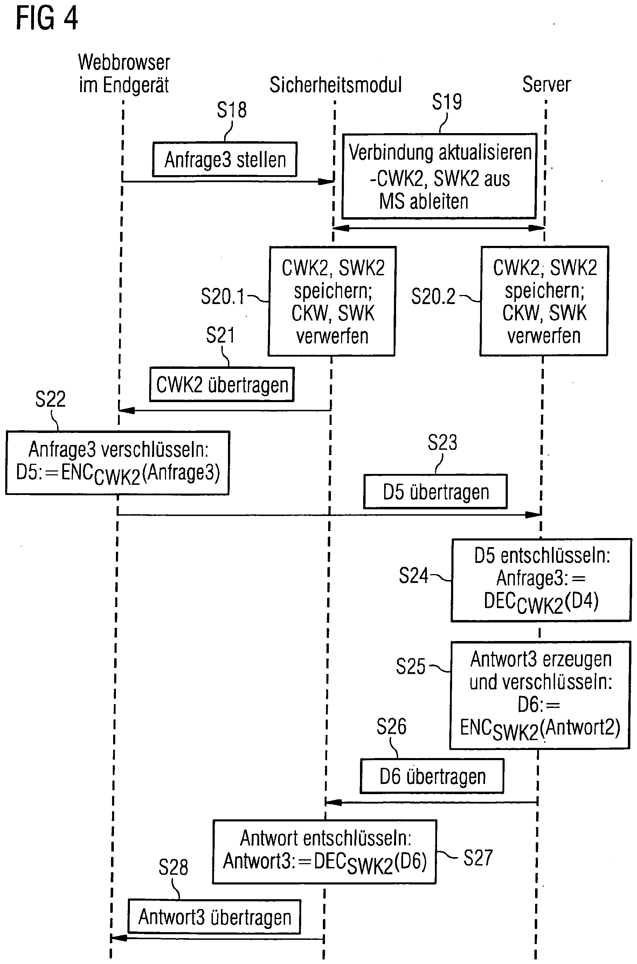

Gemäß einer Grundeinstellung des Sicherheitsmoduls 30 wird davon ausgegangen, dass eine gewöhnliche Datenkommunikation zwischen dem Webbrowser 20 und dem Server 40 derart gestaltet ist, dass das Datenvolumen im Downstream, d.h. in der Übertragungsrichtung vom Server 40 zum Webbrowser 20, wesentlich größer ist als in der umgekehrten Übertragungsrichtung im Upstream. Im gezeigten Beispiel fordert der Webbrowser 20 in der ersten Anfrage eine Webseite der Bank an. Diese Anfrage umfasst nur ein sehr geringes Datenvolumen. Die Antwort des Bankservers darauf, nämlich die angeforderten Seite, kann bereits ein großes Datenvolumen umfassen, beispielsweise aufgrund eingebetteter Graphiken und dergleichen. Anwendungsbezogen kann diese Grundeinstellung, wie nachfolgend anhand der Schritte S20 und S21 in Fig. 4 beschrieben, auch geändert werden.

In Schritt S4 wird daher der Entschlüsselungsschlüssel SWK vom Sicherheitsmodul 30 an die Webbrowsererweiterung 22 des Webbrowsers 20 übertragen. Auf diese Weise wird es möglich, wie in den Schritten S9 und S10 illustriert, große Datenmengen von dem Server 4 ohne Umweg über das Sicherheitsmodul 30 an den Webbrowser 20 zu senden. Große Datenmengen können beispielsweise verschlüsselte Antwortdaten D2 (vgl. Schritt S9) sein, die eine Antwort auf eine erste Anfrage des Webbrowser 20 sind. Die Webbrowsererweiterung 22 nimmt diese Daten D9 in Empfang, entschlüsselt sie in Schritt S10 mit Hilfe des von dem Sicherheitsmodul 30 in Schritt S4 empfangenen Entschlüsselungsschlüssels SWK und stellt sie dem Webbrowser 20 zur Anzeige bereit.

Der Verschlüsselungsschlüssel CWK verbleibt währenddessen ausschließlich im Sicherheitsmodul 30. Das Sicherheitsmodul 30 verschlüsselt mit dem Verschlüsselungsschlüssel CWK, wie in Schritt S5 dargestellt, die erste Anfrage des Webbrowser 20 und überträgt die verschlüsselten Anfragedaten D1 in Schritt S6 an den Server 40. Dieser entschlüsselt die Anfrage mittels des Schlüssels CWK - Schritt S7 -, erzeugt erste Antwortdaten - Schritt S8 -, verschlüsselt diese mittels des Schlüssels SWK und sendet die verschlüsselten Antwortdaten D2, wie beschrieben, an den Webbrowser 20 - Schritt S9.

Auf diese Weise kann vermieden werden, dass die Übertragung großer Datenmengen von dem Server 40 an den Webbrowser 20 über die Schnittstellen des Sicherheitsmoduls 30 geleitet werden muss, die hinsichtlich der erreichbaren Datenübertragungsraten eingeschränkt sind. Die Sicherheit des Verfahrens bleibt gleichwohl gewahrt, weil das Sicherheitsmodul 30 alleine im Besitz des Masterschlüssels MS bleibt und lediglich der Entschlüsselungsschlüssel SWK an den Webbrowser 20 übergeben wird. Der Verschlüsselungsschlüssel CWK wird dagegen nicht übergeben sondern verbleibt im Sicherheitsmodul 30. Der Webbrowser 20, kann somit ohne das Sicherheitsmodul 30 keine eigenständige gesicherte Datenkommunikation mit dem Server 40 durchführen, weil er keine verschlüsselten Anfragen für den Server 40 erzeugen kann. Aus demselben Grund könnte auch ein eventuell in das Endgerät 10 gelangter und dort installierter Schadcode ohne das Sicherheitsmodul 30 keine eigenständige gesicherte Datenkommunikation mit dem Server 40 durchführen.

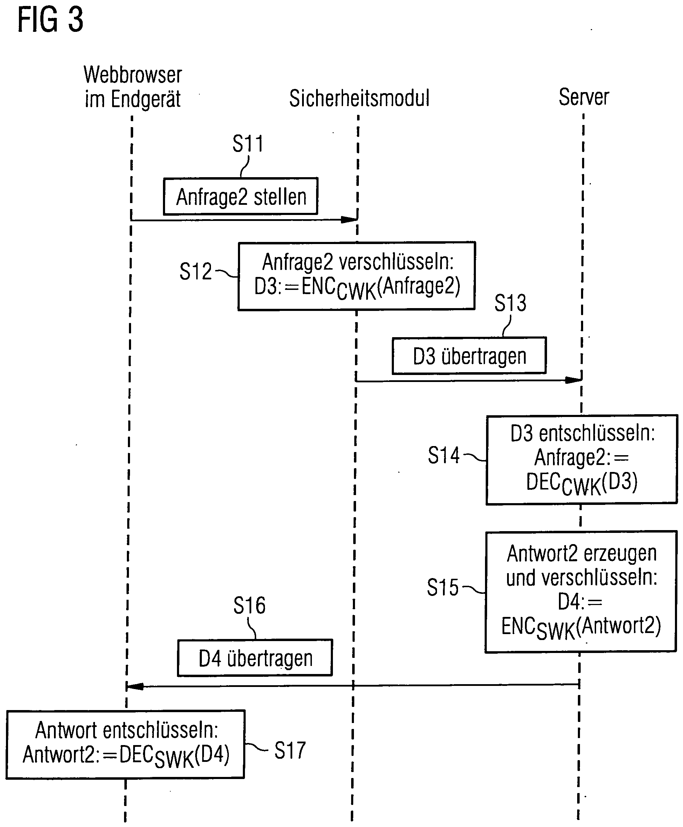

Wie in Fig. 3 gezeigt, können im Rahmen derselben Datenkommunikation auf Basis der in Schritt S2 aufgebauten gesicherten Verbindung weitere Anfragen von dem Webbrowser 20 an den Server 40 gestellt und von diesem beantwortet werden.

Eine solche weitere Anfrage des Webbrowsers 20, welche im Upstream, also vom Webbrowser 20 zum Server 40, nur ein geringes Datenvolumen umfasst, kann über das Sicherheitsmodul 30 geleitet, dort verschlüsselt und an den Server 40 übertragen werden. In der Rückrichtung können, wie beschrieben, die Antwortdaten wieder direkt, ohne Zwischenschaltung des Sicherheitsmoduls 30, an den Webbrowser 20 gesendet, dort entschlüsselt und angezeigt werden. Die Schritte S11 bis S17 im Fig. 3 entsprechen somit den Schritten S1 und S5 bis S10 in Fig.2. Die in den Schritten S2 bis S4 beschriebenen Schritte können dabei unterbleiben, da die entsprechenden Schlüssel den beteiligten Komponenten bereits vorliegen.

Als weitere Anfrage kann der Webbrowser 20 beispielsweise in Schritt S11 eine einzelne Überweisung betreffende Daten an den Server richten. Das Sicherheitsmodul 30 verschlüsselt diese Anfrage in Schritt S12 mit dem Verschlüsselungsschlüssel CWK und sendet die verschlüsselten Anfragedaten D3 in Schritt S13 an den Server 40. Dieser entschlüsselt die Anfrage in Schritt S14 mittels des Schlüssels CWK, erzeugt Antwortdaten und verschlüsselt diese wiederum mittels des Schlüssels SWK in Schritt S15. Die verschlüsselten Antwortdaten werden in Schritt S16 schließlich an den Webbrowser 20 übertragen.

Die Webbrowsererweiterung 22 entschlüsselt in Schritt S17 die Antwortdaten mit dem dort unverändert verfügbaren gültigen Entschlüsselungsschlüssel SWK (vgl. Fig. 1, Schritt S4) und stellt die entschlüsselten Antwortdaten dem Webbrowser 20 anzeigbar bereit.

Im Rahmen der aktuellen Datenkommunikation zwischen dem Webbrowser 20 und dem Server 40 sendet der Webbrowser 20, wie in Schritt S18 in Fig. 4 gezeigt, eine dritte Anfrage an den Server 40. Diese dritte Anfrage kann beispielsweise eine Massenüberweisungsliste betreffen, die an den Server 40 hochgeladen werden soll. Da eine solche Anfrage eine große Datenmenge umfasst, erfolgt nun, wie nachfolgend mit Bezug auf die Schritte S19 bis S20 beschrieben, eine Aktualisierung der gesicherten Datenkommunikationsverbindung zwischen dem Webbrowser 20 und dem Server 40. Die Aktualisierung erfolgt derart, dass nun im Upstream große Datenmengen ohne Umweg über das Sicherheitsmodul 30 - und gleichzeitig in gesicherter Weise - vom Webbrowser 20 an den Server 40 übertragen werden können. Der Webbrowser 20 und das Sicherheitsmodul 30 vertauschen dabei in Bezug auf die jeweils durchgeführte kryptographische Operation ihre Rollen.

Im Zusammenhang mit der dritten Anfrage erkennt die Webbrowsererweiterung 22, dass die hochzuladende Datenmenge eine Anpassung der gesicherten Datenkommunikationsverbindung notwendig macht. Sie veranlasst deshalb das Sicherheitsmodul 30 (in einem nicht gezeigten Schritt), die notwendigen Vorkehrungen zu treffen. In Schritt S19 aktualisiert das Sicherheitsmodul 30 die Verbindung entsprechend. Aus dem in Schritt S2 (vgl. Fig.2) ausgehandelten Masterschlüssel MS leitet das Sicherheitsmodul 30 hierzu einen weiteren Verschlüsselungsschlüssel CWK2 und einen weiteren Entschlüsselungsschlüssel SWK2 ab. Der Masterschlüssel MS bleibt gültig, der bisherige Verschlüsselungsschlüssel CWK und der bisherige Entschlüsselungsschlüssel SWK werden hingegen verworfen und verlieren ihre Gültigkeit (vgl. Schritte S20.1, S20.2). Auch die Ableitung der weiteren Schlüssel erfolgt in der Regel randomisiert. Im Zusammenhang mit dem genannten SSL/TLS-Handshake ist dieser Schritt des Ableitens der weiteren Schlüssel aus dem weiterhin gültigen Masterschlüssel als "resumed TLS-Handshake" bekannt.

In Schritt S21 überträgt das Sicherheitsmodul 30 den neuen Verschlüsselungsschlüssel CWK2 an den Webbrowser 20 bzw. dessen Erweiterung 22. Der Webbrowser 20 kann nun mit Hilfe der Webbrowsererweitung 22 und mittels des neuen Verschlüsselungsschlüssels CWK2 große Datenmengen selbst verschlüsseln und ohne Zwischenschaltung des Sicherheitsmoduls 30 direkt an den Server 40 senden; er ist zugleich allerdings nicht mehr in der Lage, eingehende verschlüsselte Daten selbst zu entschlüsseln. Der Webbrowser 20 verschlüsselt entsprechend in Schritt S22 die dritte Anfrage und überträgt die resultierenden verschlüsselten Daten D5 in Schritt S23 an den Server 40.

Auf Seiten des Servers 40 werden die empfangenen Daten D5 mittels des entsprechenden aktuellen Schlüssels CWK2 in Schritt S24 entschlüsselt. Zu der danach wieder unverschlüsselt vorliegenden dritten Anfrage erzeugt der Server 40 in Schritt S25 entsprechende Antwortdaten und verschlüsselt mittels des neuen Schlüssels SWK2, In Schritt S26 sendet der Server 40 die verschlüsselten Antwortdaten D6 an den Webbrowser 20.

Da die Webbrowsererweiterung 22 jetzt nicht mehr im Besitz eines gültigen aktuellen Entschlüsselungsschlüssels ist - sie besitzt lediglich den verworfenen, abgelaufenen Entschlüsselungsschlüssel SWK - werden die verschlüsselten Antwortdaten D6 an das Sicherheitsmodul 30 übergeben. Das Sicherheitsmodul 30 entschlüsselt die Antwortdaten D6 sodann in Schritt S27 mittels des Entschlüsselungsschlüssels SWK2 und stellt sie in entschlüsselter Form in Schritt S28 dem Webbrowser bereit. Da das Volumen der Antwortdaten D6 gering ist, diese enthalten beispielsweise lediglich eine Bestätigung des Empfangs der Anfragedaten, ist hier keine merkliche Verzögerung für den Nutzer erkennbar.

Durch die Vertauschung der Rollen der die Ver- und Entschlüsselung ausführenden Instanzen im Rahmen einer Aktualisierung der gesicherten Datenkommunikationsverbindung ist es möglich, auch im Upstream große Datenmengen in gesicherter Weise zwischen Webbrowser 20 und Server 40 zu übertragen und dabei für den Nutzer erträgliche Datenübertragungsraten zu erreichen. Die Sicherheit des Verfahrens bleibt dabei erhalten, weil der Masterschlüssel MS stets lediglich im Sicherheitsmodul 30 gespeichert ist und dieses nicht verlässt und weil stets nur entweder ein Entschlüsselungsschlüssel oder ein Verschlüsselungsschlüssel an den Webbrowser 20 übergeben wird, niemals aber beide gleichzeitig. Der Webbrowser 20 bzw. dessen Erweiterung 22 sind mithin nie im Besitz sowohl eines gültigen Verschlüsselungsschlüssels als auch des zugehörigen gültigen Entschlüsselungsschlüssels. Damit ist ausgeschlossen, dass eine gesicherte Datenkommunikation zwischen Webbrowser 20 und Server 40 - in beiden Übertragungsrichtungen - ohne das Sicherheitsmodul 30 durchgeführt werden kann.

Der mit Bezug auf die Schritte S19 bis S 21 beschriebene Prozess kann selbstverständlich bei Bedarf zu jeder Zeitwiederholt werden, um die Rollen erneut zu vertauschen und etwa wieder eine schnelle Datenübertragung im Downstream zu ermöglichen, wenn Webbrowser 20 und Sicherheitsmodul 30 auf eine schnelle Datenübertragung im Upstream eingestellt sind. Ausgehend von der Einstellung nach Schritt 21 werden dazu neue abgeleitete Schlüssel CWK3 und SWK3 gebildet, die die aktuellen Schlüssel CWK2 und SWK2 ersetzen werden.

In dem beschriebenen Verfahren fungieren sowohl das Sicherheitsmodul 30 als auch die Webbrowsererweiterung 22 in bestimmter Weise als Proxy, also als Vermittler zwischen zwei Kommunikationspartnern einer Datenkommunikation in einer Netzwerkumgebung. Das Sicherheitsmodul 30, welches jeweils im Besitz desjenigen aktuellen Schlüssels ist, der der Webbrowsererweiterung 22 nicht vorliegt, verschlüsselt bzw. entschlüsselt Anfragen bzw. Antworten, die von dem Webbrowser 20 an den Server 40 gestellt bzw. von diesem empfangen werden (vgl. beispielsweise Schritte S1, S5 und S6 in Fig. 2; Schritte S11, S12 und S13 in Fig. 3, oder Schritte S26, S27 und S28 in Fig. 4).

Die Webbrowsererweiterung 22 fungiert einmal als Proxy zwischen dem Webbrowser 20 und dem Sicherheitsmodul 30, wenn sie nach Prüfung einer Anfrage des Webbrowsers 20 an den Server 40 das Sicherheitsmodul 30 veranlasst, eine gesicherten Datenkommunikationsverbindung aufzubauen (vgl. Schritt S2 in Fig. 2) oder zu aktualisieren (vgl. Schritt S19 in Fig. 4). Zum anderen ist die Webbrowsererweiterung 22 Proxy zwischen dem Webbrowser 20 und dem Server 40, wenn sie verschlüsselte Antworten des Servers 40 entgegennimmt und entschlüsselt (vgl. Schritte S9, S10 in Fig. 2; Schritte S16, S17 in Fig. 3) oder Anfragen an den Server 40 verschlüsselt und überträgt (vgl. Schritte S22, S23 in Fig. 4).

Das beschriebene Verfahren erlaubt es somit, ein Sicherheitsmodul 30, beispielsweise eine (U)SIM-Karte eines Smartphones, in die alltägliche Internetkommunikation eines Nutzers zu integrieren und damit die Sicherheit, Integrität und Vertraulichkeit übertragener und/oder empfangener Daten zu erhöhen.

Gemäß einer bevorzugten Ausführungsform des beschriebenen Verfahrens erfolgt der Aufbau der gesicherten Datenkommunikationsverbindung (in Schritt S2) unter einseitiger oder gegenseitiger Authentifizierung. Der Server 40 authentisiert sich in der Regel stets gegenüber dem Sicherheitsmodul 30 mittels eines Serverzertifikats, das Sicherheitsmodul 30 authentisiert sich vorzugsweise ebenfalls gegenüber dem Server 40 mittels eines Nutzerzertifikats, welches auf dem Sicherheitsmodul 30 gespeichert ist. Dies erhöht die Sicherheit des Verfahrens zusätzlich. Die an dem Server 40 gegebenenfalls vorzunehmenden Anpassungen zur Verarbeitung des Nutzerzertifikats sind minimal. Empfängt der Server 40 kein Nutzerzertifikat, so kann er eine andersartige Authentisierung des Nutzers des Endgeräts 10 verlangen, beispielsweise die Eingabe einer PIN oder dergleichen.

Weiterhin kann das Verfahren geschützt werden, indem vor dem Aufbau der gesicherten Verbindung zwischen Webbrowser 20 und Server 40 eine Sicherheitsabfrage an den Nutzer des mobilen Endgeräts 10 gestellt wird, welche gegenüber dem Sicherheitsmodul 30 zu beantworten ist. Nur bei korrekter Antwort, die in der Regel lediglich dem legitimen Benutzer des Endgeräts - und des damit verbundenen Sicherheitsmoduls 30 - bekannt ist, ermöglicht das Sicherheitsmodul 30 die gesicherte Datenkommunikation.

Besonders sicher wird ein solcher zusätzlicher Schritt, wenn die Eingabe der Antwort direkt in das Sicherheitsmodul 30, ohne Umweg über ein eventuell von Schadcode befallenes Endgerät 10 erfolgt. Das Sicherheitsmodul 30 kann dazu beispielsweise einen Bewegungssensor (nicht gezeigt) umfassen. Gezieltes Schütteln des Sicherheitsmoduls 30 oder Klopfen desselben auf einen Gegenstand können auf diese Weise als verschiedene Eingabe erkannt und verarbeitet werden.

Eine weitere Stufe der Sicherung kann erreicht werden, indem die Sicherheitsabfrage in Bezug auf die nachfolgende Datenkommunikation steht. Beispielsweise kann zum Freigeben einer nachfolgenden Inlandsüberweisung eine erste Antwort auf die Sicherheitsabfrage erforderlich sein, zum Freigeben einer Auslandüberweisung eine zweite, von der ersten Antwort abweichende Antwort.

## Patentansprüche

1. Verfahren zur gesicherten Datenkommunikation zwischen einem Webbrowser (20) auf einem mobilen Endgerät (10) und einem Server (40) unter Verwendung eines in das mobile Endgerät (10) integrierten oder damit verbundenen Sicherheitsmoduls (30), umfassend die Schritte:
- Aushandeln (S2) eines Geheimdatums (MS) zwischen dem Sicherheitsmodul (30) und dem Server (40);
- Ableiten (S2) zumindest eines Schlüssels (CWK; SWK, CWK2; SWK2) aus dem Geheimdatum (MS) durch das Sicherheitsmodul (30);
**gekennzeichnet durch** die Schritte:
- Übertragen (S4; S21) eines (SWK; CWK2) abgeleiteten Schlüssels (CWK; SWK, CWK2; SWK2) an den Webbrowser (20); und
- Durchführen der gesicherten Datenkommunikation zwischen dem Server (40) und dem Webbrowser (20) derart, dass in einer Übertragungsrichtung die Datenkommunikation ohne Zwischenschaltung des Sicherheitsmoduls (30) unter Verwendung des an den Webbrowser (20) übertragenen, abgeleiteten Schlüssels (SWK; CWK2) erfolgt (S9, S10; S16, S17; S22, S23) und in der anderen Übertragungsrichtung immer über das Sicherheitsmodul (30).

2. Verfahren nach Anspruch 1, **dadurch gekennzeichnet, dass** der Webbrowser (20) eine Webbrowsererweiterung (22) umfasst, welche eingerichtet ist, das Sicherheitsmodul (30) zu veranlassen, für eine gesicherte Datenkommunikation mit dem Server (40) das Geheimdatum (MS) mit dem Server (40) auszuhandeln und den zumindest einen Schlüssel (CWK; SWK, CWK2; SWK2) aus dem Geheimdatum (MS) abzuleiten, und eingerichtet ist, einen (SWK; CWK2) des zumindest einen abgeleiteten Schlüssels (CWK; SWK, CWK2; SWK2) von dem Sicherheitsmodul (30) zu empfangen und die gesicherte Datenkommunikation des Webbrowsers (20) mit dem Server (40) unter Verwendung des empfangenen Schlüssels (SWK; CWK2) zu unterstützen

3. Verfahren nach Anspruch 1 oder 2, **dadurch gekennzeichnet, dass** das Sicherheitsmodul (30) im Schritt des Ableitens des zumindest einen Schlüssels (CWK; SWK, CWK2; SWK2) aus dem Geheimdatum (MS) einen Verschlüsselungsschlüssel (CWK; CWK2) ableitet, der dazu eingerichtet ist, im Rahmen der gesicherten Datenkommunikation an den Server (40) zu übertragende Daten zu verschlüsseln (S5; S12; S22), und einen Entschlüsselungsschlüssel (SWK; SWK2) ableitet, der dazu eingerichtet ist, im Rahmen der gesicherten Datenkommunikation vom dem Server (40) empfangene Daten zu entschlüsseln (S10; S17; S27).

4. Verfahren nach Anspruch 3, **dadurch gekennzeichnet, dass** das Sicherheitsmodul (30) im Schritt des Übertragens des einen Schlüssels (SWK; CWK2) den Verschlüsselungsschlüssel (CWK2) oder den Entschlüsselungsschlüssel (SWK) an den Webbrowser (20) überträgt.

5. Verfahren nach Anspruch 2 und 4, **dadurch gekennzeichnet, dass** die Webbrowsererweiterung (22) die gesicherte Datenkommunikation mit dem Server (40) dadurch unterstützt, dass sie, wenn sie den Verschlüsselungsschlüssel (CKW2) von dem Sicherheitsmodul (30) empfängt, an den Server (40) zu übertragende Daten mittels des Verschlüsselungsschlüssels (CWK2) verschlüsselt (S22) und an den Server überträgt (S23), oder dass sie, wenn sie den Entschlüsselungsschlüssel (SWK) von dem Sicherheitsmodul (30) empfängt, von dem Server (40) empfangene Daten (S9; S16) mittels des Entschlüsselungsschlüssels (SWK) entschlüsselt (S10; S17) und an den Webbrowser weiterleitet.

6. Verfahren nach einem der Ansprüche 3 bis 5, **dadurch gekennzeichnet, dass** das Sicherheitsmodul (30) im Laufe der gesicherten Datenkommunikation aus dem ausgehandelten Geheimdatum (MS) einen weiteren Verschlüsselungsschlüssel (CWK2) und einen weiteren Entschlüsselungsschlüssel (SWK2) abgeleitet (S19), wobei der weitere Verschlüsselungsschlüssel (CWK2) den zuvor abgeleiteten Verschlüsselungsschlüssel (CWK) ersetzt und der weitere Entschlüsselungsschlüssel (SWK2) den zuvor abgeleiteten Entschlüsselungsschlüssel (SWK) ersetzt.

7. Verfahren nach Anspruch 4 und 6, **dadurch gekennzeichnet, dass**, wenn das Sicherheitsmodul (30) im Schritt des Übertragens des einen Schlüssels den Verschlüsselungsschlüssel (CWK) an den Webbrowser (20) überträgt, es in einem weiteren Schritt den weiteren Entschlüsselungsschlüssel (SWK2) an den Webbrowser (20) überträgt, oder, wenn das Sicherheitsmodul (30) im Schritt des Übertragens (S4) des einen Schlüssels den Entschlüsselungsschlüssel (SWK) an den Webbrowser (20) überträgt, es in einem weiteren Schritt (S21) den weiteren Verschlüsselungsschlüssel (CWK2) an den Webbrowser (20) überträgt.

8. Verfahren nach einem der Ansprüche 1 bis 7, **dadurch gekennzeichnet, dass** vor dem Aufbauen der gesicherten Datenkommunikation eine gegenüber dem Sicherheitsmodul (30) zu beantwortende Sicherheitsabfrage an einen Nutzer des mobilen Endgeräts (10) gerichtet wird.

9. Verfahren nach Anspruch 8, **dadurch gekennzeichnet, dass** eine Antwort auf die Sicherheitsabfrage ohne Zwischenschaltung des mobilen Endgeräts (10) in das Sicherheitsmodul (30) eingegeben wird.

10. Verfahren nach einem der Ansprüche 8 oder 9, **dadurch gekennzeichnet, dass** die Sicherheitsabfrage und/oder eine Antwort auf die Sicherheitsabfrage abhängig sind von in einer nachfolgenden gesicherten Datenkommunikation zu übertragenden Daten.

11. Verfahren nach einem der Ansprüche 1 bis 10, **dadurch gekennzeichnet, dass** sich beim Schritt des Aushandelns des Geheimdatums (MS) der Server (40) mittels eines Serverzertifikats bei dem Sicherheitsmodul (30) authentisiert und/oder sich das Sicherheitsmodul (30) mittels eines einem Nutzer des Sicherheitsmoduls (30) zugeordneten, auf dem Sicherheitsmodul (30) gespeicherten Nutzerzertifikats beim Server (40) authentisiert.

12. Sicherheitsmodul (30) für ein mobiles Endgerät (10) zur Absicherung der Datenkommunikation zwischen einem Webbrowser (20) eines mobilen Endgeräts (10) und einem Server (40), indem das Sicherheitsmodul (30) die Datenübertragung zumindest teilweise ver- oder entschlüsselt, wobei das Sicherheitsmodul (30) dazu eingerichtet ist, ein Geheimdatum (MS) mit dem Server (40) auszuhandeln und zumindest einen Schlüssel (CWK; SWK, CWK2; SWK2) aus dem Geheimdatum (MS) abzuleiten, **dadurch gekennzeichnet, dass** das Sicherheitsmodul (30) weiter dazu eingerichtet ist, einen Schlüssel (CWK; SWK, CWK2; SWK2) an einen Webbrowser (20) des mobilen Endgeräts (10) zu übertragen, damit eine gesicherte Datenkommunikation zwischen dem Server (40) und dem Webbrowser (20) derart durchgeführt werden kann, dass in jeweils einer Übertragungsrichtung die gesicherte Datenkommunikation ohne Zwischenschaltung des Sicherheitsmoduls (30) und unter Verwendung des an den Webbrowser (20) übertragenen abgeleiteten Schlüssels (SWK; CWK2) erfolgt, während die gesicherte Datenkommunikation in der jeweils anderen Übertragungsrichtung über das Sicherheitsmodul (30) erfolgt.

13. Sicherheitsmodul (30) nach Anspruch 12, **dadurch gekennzeichnet, dass** das Sicherheitsmodul (30) eingerichtet ist, ein Verfahren nach einem der Ansprüche 1 bis 11 zu unterstützen.

14. System, umfassend ein Sicherheitsmodul (30) nach Anspruch 12 oder 13, ein mobiles Endgerät (10), sowie einen Server (40), welche eingerichtet sind, ein Verfahren nach einem der Ansprüche 1 bis 10 durchzuführen.

## Claims

1. A method for secure data communication between a web browser (20) on a mobile terminal (10) and a server (40), using a security module (30) integrated in or connected to the mobile terminal (10), comprising the steps of:
- negotiating (S2) a secret datum (MS) between the security module (30) and the server (40);
- deriving (S2) at least one key (CWK; SWK, CWK2; SWK2) from the secret datum (MS) by the security module (30);
**characterized by** the steps of
- transmitting (S4; S21) one (SWK; CWK2) derived key (CWK; SWK, CWK2; SWK2) to the web browser (20); and
- carrying out the secure data communication between the server (40) and the web browser (20) in such a fashion that the data communication is effected (S9, S10; S16, S17; S22, S23) in one transmission direction without the interposition of the security module (30), using the derived key (SWK; CWK2) transmitted to the web browser (20), and in the other transmission direction always via the security module (30).

2. The method according to claim 1, **characterized in that** the web browser (20) comprises a web browser extension (22) which is adapted to cause the security module (30) to negotiate the secret datum (MS) with the server (40) for a secure data communication with the server (40) and to derive the at least one key (CWK; SWK, CWK2; SWK2) from the secret datum (MS), and is adapted to receive one (SWK; CWK2) of the at least one derived key (CWK; SWK, CWK2; SWK2) from the security module (30) and to support the secure data communication of the web browser (20) with the server (40), using the received key (SWK; CWK2).

3. The method according to claim 1 or 2, **characterized in that** in the step of deriving the at least one key (CWK; SWK, CWK2; SWK2) from the secret datum (MS) the security module (30) derives an encryption key (CWK; CWK2) that is adapted to encrypt (S5, S12, S22) data to be transmitted to the server (40) within the framework of the secure data communication and derives a decryption key (SWK; SWK2) which is adapted to decrypt (S10; S17; S27) data received from the server (40) within the framework of the secure data communication.

4. The method according to claim 3, **characterized in that** in the step of transmitting the one key (SWK; CWK2) the security module (30) transmits the encryption key (CWK2) or the decryption key (SWK) to the web browser (20).

5. The method according to claim 2 and 4, **characterized in that** the web browser extension (22) supports the secure data communication with the server (40) **in that**, when it receives the encryption key (CKW2) from the security module (30), it encrypts (S22) data to be transmitted to the server (40) by means of the encryption key (CWK2) and transmits (S23) them to the server or that, when it receives the decryption key (SWK) from the security module (30), it decrypts (S10; S17) data received (S9; S16) from the server (40) by means of the decryption key (SWK) and forwards them to the web browser.

6. The method according to any of the claims 3 to 5, **characterized in that** in the course of the secure data communication the security module (30) derives (S19) from the negotiated secret datum (MS) a further encryption key (CWK2) and a further decryption key (SWK2), wherein the further encryption key (CWK2) replaces the previously derived encryption key (CWK) and the further decryption key (SWK2) replaces the previously derived decryption key (SWK).

7. The method according to claim 4 and 6, **characterized in that,** when, in the step of transmitting the one key, the security module (30) transmits the encryption key (CWK) to the web browser (20), it transmits the further decryption key (SWK2) to the web browser (20) in a further step or, when, in the step of transmitting (S4) the one key, the security module (30) transmits the decryption key (SWK) to the web browser (20), it transmits the further encryption key (CWK2) to the web browser (20) in a further step (S21).

8. The method according to any of the claims 1 to 7, **characterized in that** prior to setting up the secure data communication, a security query is directed at a user of the mobile terminal (10) which needs to be responded to vis-a-vis the security module (30).

9. The method according to claim 8, **characterized in that** a response to the security query is entered into the security module (30) without the interposition of the mobile terminal (10).

10. The method according to any of the claims 8 or 9, **characterized in that** the security query and/or a response to the security query are dependent on data to be transmitted in a subsequent secure data communication.

11. The method according to any of the claims 1 to 10, **characterized in that,** in the step of negotiating the secret datum (MS), the server (40) authenticates itself to the security module (30) by means of a server certificate and/or the security module (30) authenticates itself to the server (40) by means of a user certificate allocated to a user of the security module (30) that is stored on the security module (30).

12. A security module (30) for a mobile terminal (10) for securing the data communication between a web browser (20) of a mobile terminal (10) and a server (40), wherein the security module (30) encrypts or decrypts the data transmission at least partially, wherein the security module (30) is adapted to negotiate a secret datum (MS) with the server (40) and to derive at least one key (CWK; SWK, CWK2; SWK2) from the secret datum (MS), **characterized in that** the security module (30) is further adapted to transmit a key (CWK; SWK, CWK2; SWK2) to a web browser (20) of the mobile terminal (10), so that a secure data communication can be carried out between the server (40) and the web browser (20) in such a fashion that in respectively one transmission direction the secure data communication is effected without the interposition of the security module (30) and using the derived key (SWK; CWK2) transmitted to the web browser (20), whereas the secured data communication in the respectively other transmission direction is effected via the security module (30).

13. The security module (30) according to claim 12, **characterized in that** the security module (30) is adapted to support a method according to any of the claims 1 to 11.

14. A system, comprising a security module (30) according to claim 12 or 13, a mobile terminal (10) and a server (40) which are adapted to carry out a method according to any of the claims 1 to 10.

## Revendications

1. Procédé destiné à la communication de données sécurisée entre un navigateur web (20) situé sur un terminal (10) mobile et un serveur (40) en ayant recours à un module de sécurité (30) intégré dans le terminal (10) mobile ou relié avec lui, comprenant les étapes.
négociation (S2) d'une donnée secrète (MS) entre le module de sécurité (30) et le serveur (40), dérivation (S2) d'au moins une clé (CWK; SWK, CWK2; SWK2) à partir de la donnée secrète (MS) par le module de sécurité (30);
**caractérisé par** les étapes :
transmission (S4; S21) d'une (SWK; CWK2) clé (CWK; SWK, CWK2; SWK2) dérivée au navigateur web (20) ; et
exécution de la communication de données sécurisée entre le serveur (40) et le navigateur web (20), de telle façon que, dans une direction de transmission, la communication de données a lieu (S9, S10; S16, S17; S22, S23) sans interposition du module de sécurité (30), en ayant recours à la clé (SWK; CWK2) dérivée transmise au navigateur web (20), et que, dans l'autre direction de transmission, elle a toujours lieu par l'intermédiaire du module de sécurité (30).

2. Procédé selon la revendication 1, **caractérisé en ce que** le navigateur web (20) comprend une extension de navigateur web (22) qui est configurée pour, aux fins d'une communication de données sécurisée avec le serveur (40), inciter le module de sécurité (30) à négocier avec le serveur (40) la donnée secrète (MS) et dériver la au moins une clé (CWK; SWK, CWK2; SWK2) à partir de la donnée secrète (MS), et est configurée pour recevoir de la part du module de sécurité (30) une (SWK; CWK2) de la au moins une clé (CWK; SWK, CWK2; SWK2) dérivée et pour assister la communication de données sécurisée du navigateur web (20) avec le serveur (40) en ayant recours à la clé (SWK; CWK2) reçue.

3. Procédé selon la revendication 1 ou 2, **caractérisé en ce que** le module de sécurité (30), à l'étape de la dérivation de la moins une clé (CWK; SWK, CWK2; SWK2) à partir de la donnée secrète (MS), dérive une clé de cryptage (CWK; CWK2) qui est configurée pour, dans le cadre de la communication de données sécurisée, crypter (S5; S12; S22) des données à transmettre au serveur (40), et dérive une clé de décryptage (SWK; SWK2) qui est configurée pour, dans le cadre de la communication de données sécurisée, décrypter (S10; S 17; S27) des données reçues de la part du serveur (40).

4. Procédé selon la revendication 3, **caractérisé en ce que** le module de sécurité (30), à l'étape de la transmission de la une clé (SWK; CWK2), transfère au navigateur web (20) la clé de cryptage (CWK2) ou la clé de décryptage (SWK).

5. Procédé selon la revendication 2 et 4, **caractérisé en ce que** l'extension de navigateur web (22) assiste la communication de données sécurisée avec le serveur (40) par le fait que, quand elle reçoit la clé de cryptage (CWK2) de la part du module de sécurité (30), elle crypte (S22) au moyen de la clé de cryptage (CWK2) des données à transmettre au serveur (40) et les transmet (S23) au serveur, ou que, quand elle reçoit la clé de décryptage (SWK) de la part du module de sécurité (30), elle décrypte (S 10: S17) au moyen de la clé de décryptage (SWK) des données (S9; S16) reçues de la part du serveur (40) et les transmet au navigateur web.

6. Procédé selon une des revendications de 3 à 5, **caractérisé en ce que** le module de sécurité (30), au cours de la communication de données sécurisée, dérive (S 19) à partir de la donnée secrète (MS) négociée une autre clé de cryptage (CWK2) et une autre clé de décryptage (SWK2), l'autre clé de cryptage (CWK2) remplaçant la clé de cryptage (CWK) auparavant dérivée, et l'autre clé de décryptage (SWK2) remplaçant la clé de décryptage (SWK) auparavant dérivée.

7. Procédé selon la revendication 4 et 6, **caractérisé en ce que**, quand le module de sécurité (30), à l'étape de la transmission de la une clé, transfère la clé de cryptage (CWK) au navigateur web (20), il transfère à une étape suivante l'autre clé de décryptage (SWK2) au navigateur web (20), ou que, quand le module de sécurité (30), à l'étape de la transmission (S4) de la une clé, transfère la clé de décryptage (SWK) au navigateur web (20), il transfère à une étape suivante (S21) l'autre clé de cryptage (CWK2) au navigateur web (20),

8. Procédé selon une des revendications de 1 à 7, **caractérisé en ce que**, avant de l'établissement de la communication de données sécurisée, une interrogation de sécurité nécessitant une réponse à fournir au module de sécurité (30) est adressée à un utilisateur du terminal (10) mobile.

9. Procédé selon la revendication 8, **caractérisé en ce qu'**une réponse à l'interrogation de sécurité est entrée sans interposition du terminal (10) mobile dans le module de sécurité (30).

10. Procédé selon une des revendications 8 ou 9, **caractérisé en ce que** l'interrogation de sécurité et/ou une réponse à l'interrogation de sécurité dépendent de données à transférer dans une communication de données sécurisée subséquente.

11. Procédé selon une des revendications de 1 à 10 **caractérisé en ce que**, à l'étape de la négociation de la donnée secrète (MS), le serveur (40) s'authentifie auprès du module de sécurité (30) au moyen d'un certificat du serveur et/ou le module de sécurité (30) s'authentifie auprès du serveur (40) au moyen d'un certificat utilisateur affecté à un utilisateur du module de sécurité (30) et mémorisé sur le module de sécurité (30).

12. Module de sécurité (30) destiné à un terminal (10) mobile pour la sécurisation de la communication de données entre un navigateur web (20) d'un terminal (10) mobile et un serveur (40), ce qui a lieu en ce que le module de sécurité (30) crypte ou décrypte au moins partiellement la transmission de données, le module de sécurité (30) étant configuré pour négocier une donnée secrète (MS) avec le serveur (40) et pour dériver au moins une clé (CWK; SWK, CWK2; SWK2) à partir de la donnée secrète (MS), **caractérisé en ce que** le module de sécurité (30) est en outre configuré pour transférer une clé (CWK; SWK, CWK2; SWK2) à un navigateur web (20) du terminal (10) mobile afin qu'une communication de données sécurisée entre le serveur (40) et le navigateur web (20) puisse être exécutée de telle façon que, dans respectivement une direction de transmission, la communication de données sécurisée a lieu sans interposition du module de sécurité (30) et en ayant recours à la clé (SWK; CWK2) dérivée transmise au navigateur web (20), tandis que, dans respectivement l'autre direction de transmission, la communication de données sécurisée a lieu par l'intermédiaire du module de sécurité (30).

13. Module de sécurité (30) selon la revendication 12, **caractérisé en ce que** le module de sécurité (30) est configuré pour assister un procédé selon une des revendications de 1 à 11.

14. Système comprenant un module de sécurité (30) selon la revendication 12 ou 13, un terminal (10) mobile ainsi qu'un serveur (40) qui sont configurés pour exécuter un procédé selon une des revendications de 1 à 10.
